(19) Europäisches Patentamt
European Patent Office
Office européen des brevets

(11) Veröffentlichungsnummer: **0 008 062**
**A1**

(12) **EUROPÄISCHE PATENTANMELDUNG**

(21) Anmeldenummer: **79102715.4**

(22) Anmeldetag: **31.07.79**

(51) Int. Cl.³: **G 12 B 9/08,** H 01 F 7/04, G 01 D 11/30

(30) Priorität: **04.08.78 DE 2834253**

(43) Veröffentlichungstag der Anmeldung: **20.02.80 Patentblatt 80/4**

(84) Benannte Vertragsstaaten: **AT BE CH FR GB IT LU NL SE**

(71) Anmelder: **HOLSATIA Magnet- + Zerspanungstechnik GmbH, Schwanenwik 29, D-2000 Hamburg 76 (DE)**

(72) Erfinder: **Hallmann, Hermann, Hofweg 51, D-2000 Hamburg 76 (DE)**

(74) Vertreter: **Uexküll & Stolberg Patentanwälte, Beselerstrasse 4, D-2000 Hamburg 52 (DE)**

(54) **Magnetische Haltevorrichtung, insbesondere Messständer.**

(57) Eine magnetische Haltevorrichtung, insbesondere ein Meßständer, weist meistens zwei aus ferromagnetischen Material bestehende, im Abstand voneinander angeordnete Stege (2, 4; 3, 5) auf, zwischen denen ein Permanentmagnet (1) bewegbar gehalten ist. Um einen möglichst einfachen Aufbau zu erzielen und eine Einhand-Bedienung zu ermöglichen, sind die Stege an (2, 4; 3, 5) einem Ende durch einen Quersteg (12) aus ferromagnetischem Material miteinander verbunden und im Mittelbereich durch eine Trennschicht (6; 7) aus nichtmagnetisierbarem Material unterbrochen. Der Permanentmagnet (1) ist mit einem Magnetpol (5) dem einen Steg (2, 4) und mit dem anderen Magnetpol (N) dem anderen Steg (3, 5) zugewandt und kann in axialer Richtung der Stege (2, 4; 3, 5) hin- und herbewegt werden, so daß er sich in der Freigabestellung zwischen den oberen Abschnitten (2, 3) der Stege befindet, die sich zwischen dem Quersteg (12) und den Trennschichten (6; 7) aus nichtmagnetisierbarem Material befinden, während sich der Permanentmagnet (1) in der Arbeitsstellung, in der ein ferromagnetisches Werkstück angezogen wird, zwischen den unteren Abschnitten (4, 5) der Stege befindet.

14
16
15
12
13
16
1
6
17
4
10

EP 0 008 062 A1

UEXKÜLL & STOLBERG
PATENTANWÄLTE

BESELERSTRASSE 4
D 2000 HAMBURG 52

PROFESSIONAL REPRESENTATIVES
BEFORE THE EUROPEAN PATENT OFFICE

DR J D FRHR von UEXKÜLL
DR ULRICH GRAF STOLBERG
DIPL ING JÜRGEN SUCHANTKE
DIPL ING ARNULF HUBER
DR ALLARD von KAMEKE
DR KARL HEINZ SCHULMEYER

0008062

(15963)

HOLSATIA
Magnet- + Zerspanungs-
technik GmbH
Schwanenwik 29

2000 Hamburg 76

Magnetische Haltevorrichtung, insbesondere Meßständer

Die Erfindung bezieht sich auf eine magnetische Haltevorrichtung, insbesondere Meßständer, mit mindestens einem bewegbaren Permanentmagneten, der zwischen zwei im Abstand voneinander befindlichen Stegen aus ferromagnetischem Material angeordnet ist, deren untere Flächen gegebenenfalls unter Zwischenschaltung einer Schicht aus nicht magnetisierbarem Material, die Auflageflächen zur Verbindung mit dem Werkstück bilden, durch die in der Haltestellung des Permanentmagneten im wesentlichen die magnetischen Feldlinien verlaufen, während sich die magnetischen Feldlinien in der Freigabestellung des Permanentmagneten im wesentlichen innerhalb der Stege erstrecken.

Derartige Haltevorrichtungen werden zur Zeit im großen Umfang als Meßständer benutzt, d. h. als Ständer zur Halterung von Meßuhren, mit denen mechanisch Abmessungen von Werkstücken überprüft werden. Dazu werden diese Meßständer durch Magnetkraft beispielsweise am Bett oder am Spindelkasten einer Drehbank befestigt, und die über ein Gestänge mit dem Ständer verbundene Meßuhr wird in Berührung mit dem Werkstück gebracht. Häufig weisen die beiden Stege im Bereich der einander zugewandten Kanten ihrer unteren Flächen Abschrägungen auf, die auch eine Befestigung des Ständers auf einer Welle u. ä. ermöglichen.

Der Permanentmagnet der bekannten Meßständer dieser Art hat die Form einer Kreisscheibe, die um ihre Mittelachse drehbar zwischen den beiden Stegen gehaltert ist, wozu die Stege teilkreisförmige Aussparungen aufweisen können. Die neutrale Ebene des Permanentmagneten verläuft durch die Mittelachse und senkrecht zur Kreisfläche, so daß also der eine halbkreisförmige Teil des Permanentmagneten einen magnetischen Nordpol und der andere halbkreisförmige Teil einen magnetischen Südpol bildet.

Wenn die neutrale Ebene parallel zu den Stegen verläuft, so ist dem einen Steg der magnetische Nordpol des Permanentmagneten und dem anderen Steg sein magnetischer Südpol benachbart, und die magnetischen Feldlinien verlaufen infolge des geringen magnetischen Widerstandes der Stege durch diese hindurch und von der unteren Fläche des einen Steges zur unteren Fläche des anderen Steges. Da-

0008062

durch wird zwischen den beiden vorderen Flächen ein Magnetfeld aufgebaut, das zur Halterung des Meßständers an einem ferromagnetischen Werkstück dient.

Wird der Permanentmagnet um seine Längsachse gedreht und in eine gegenüber der vorstehend erläuterten Haltestellung um 90° versetzten Freigabestellung gebracht, so befindet sich die neutrale Ebene des Permanentmagneten in einer Lage senkrecht zur Längsstreckung beider Stege. Dadurch liegen jedem der Stege sowohl magnetische Nordpol- als auch magnetische Südpolbereiche gegenüber, und die magnetischen Feldlinien verlaufen nur innerhalb der Stege vom magnetischen Nordpolbereich zum benachbarten magnetischen Südpolbereich, ohne daß magnetische Feldlinien aus den unteren Flächen der Stege austreten. In dieser Freigabestellung kann also der Meßständer ohne weiteres von einer ferromagnetischen Unterlage abgenommen werden.

Obwohl die vorstehend beschriebenen Meßständer in großem Umfang erfolgreich eingesetzt werden, haben sie den Nachteil hoher Kosten, denn die Form des Permanentmagneten sowie seine Lagerung sind fertigungstechnisch verhältnismäßig aufwendig. Darüber hinaus müssen die bekannten Meßständer mit zwei Händen angesetzt und gelöst werden, denn mit einer Hand muß der Meßständer gehalten und mit der anderen Hand die Drehbewegung des Permanentmagneten ausgeführt werden.

Es ist demgegenüber Aufgabe der Erfindung, eine einfach aufgebaute, mit geringen Kosten herstellbare magnetische Haltevorrichtung zu schaffen, die mit einer Hand auf eine ferromagnetische Unterlage aufgesetzt und an ihr befestigt sowie auch mit einer Hand von ihr abgenommen werden kann.

Zur Lösung dieser Aufgabe wird eine Haltevorrichtung eingangs erwähnten Art erfindungsgemäß derart ausgestaltet, daß die Stege in ihrem oberen Endbereich durch einen Quersteg aus ferromagnetischem Material verbunden und quer zu ihrer Längserstreckung durch nicht magnetisierbares Material in jeweils einen unteren und einen oberen Abschnitt unterteilt sind und daß der Permanentmagnet mit einem seiner Magnetpole dem einen Steg und mit dem anderen Magnetpol dem anderen Steg zugewandt in axialer Richtung der Stege zwischen der Haltestellung, in der er sich im Bereich der unteren Abschnitte der Stege befindet, und der Freigabestellung, in der er sich im Bereich der oberen Abschnitte der Stege befindet, bewegbar ist.

Bei der erfindungsgemäßen Haltevorrichtung, die beispielsweise als Meßständer oder auch als Hebevorrichtung zum Anheben und Transportieren ferromagnetischer Werkstücke dienen kann, ist somit eine axiale, fertigungstechnisch sehr einfach zu erreichende Bewegbarkeit des Permanentmagneten vorgesehen, und die Haltevorrichtung kann durch Eingriff mit dem Permanentmagneten mit einer Hand gehalten, auf eine ferromagnetische Unterlage aufgesetzt und dann durch Magnetkraft befestigt werden, indem der Permanentmagnet mittels der mit ihm in Eingriff stehenden Hand nach unten in seine Haltestellung geschoben wird, in der er die Unterlage nicht berührt. In dieser Haltestellung bilden die unteren Abschnitte der Stege mit der Unterlage aus ferromagnetischem Material einen magnetischen Pfad geringen Widerstandes, so daß sich die magnetischen Feldlinien im wesentlichen durch die unteren Flächen der Stege sowie das ferromagnetische Material der Unterlage erstrecken und so die Haltevorrichtung auf dieser halten. Dabei brauchen jedoch die unteren Flächen der Stege nicht in direkter Berührung mit der ferromagnetischen Unterlage bzw. dem Werkstück zu stehen, sondern sie können mit einer Schicht aus nicht magnetischem Metall, etwa Messing, abgedeckt sein, durch das die magnetischen Feldlinien hindurchtreten.

Soll die Haltevorrichtung von der Unterlage abgenommen werden, so braucht der Permanentmagnet lediglich nach oben verschoben zu werden, bis er in den Bereich der oberen Abschnitte der Stege gelangt. In dieser Freigabestellung bilden die oberen Abschnitte der Stege mit dem ferromagnetischen Quersteg einen Pfad geringen magnetischen Widerstandes, so daß die magnetischen Feldlinien in ihm verlaufen und nicht in die unteren Abschnitte der Stege gelangen. Das Abheben von der Unterlage kann dann durch Eingriff mit dem Permanentmagneten erfolgen.

Der Übergang der magnetischen Feldlinien von den unteren Abschnitten der Stege in die oberen Abschnitte bei sich in der Haltestellung befindendem Permanentmagneten bzw. von den oberen Abschnitten in die unteren Abschnitte bei sich in der Freigabestellung befindendem Permanentmagneten wird durch die Unterteilung der Stege aus nicht magnetisierbarem Material etwa Messingschichten, verhindert, die einen großen magnetischen Widerstand darstellen, so daß das Magnetfeld entlang des jeweils vorhandenen Pfades geringen magnetischen Widerstandes verläuft.

Um die Haltekraft der Haltevorrichtung auf einer ferromagnetischen Unterlage zu verstärken, können drei im Abstand voneinander angeordnete Stege vorgesehen sein, zwischen denen jeweils ein Permanentmagnet angeordnet ist, wobei dem mittleren Steg gleichnamige Pole der beiden Permanentmagneten zugewandt sind. Dadurch verlaufen durch den mittleren Steg die Feldlinien beider Permanentmagneten, und in der Haltestellung verlaufen diese Feldlinien dann durch die ferromagnetische Unterlage und in die jeweils äußeren Stege. Dies führt zu einer erheblichen Vergrößerung der Haltekraft. Um dabei das Material des mittleren Steges nicht zu hoch in die Sättigung zu bringen, kann der Querschnitt des mittleren Steges doppelt so groß sein wie der Querschnitt jedes äußeren Steges, was insbesondere dann zweckmäßig ist, wenn die beiden Permanentmagneten gleich aufgebaut sind.

Um sicherzustellen, daß die unteren Abschnitte der Stege bei sich in der Freigabestellung befindendem Permanentmagneten keinen Feldanteil des Permanentmagenten übernehmen, kann die untere Fläche des Permanentmagneten in dieser Stellung oberhalb des oder auf gleicher Höhe wie das die Stege unterteilende, nicht magnetisierbare Material liegen, und um die gesamte Wirkung des Permanentmagneten in der Haltestellung für die Haltekraft zur Verfügung zu haben, kann die axiale Länge der unteren Abschnitte der Stege größer als die axiale Länge des Permanentmagneten sein, so daß sich der Permanentmagnet vollständig in den Bereich der unteren Abschnitte bewegen läßt. Damit der Permanentmagnet in der Freigabestellung nicht am Quersteg haftet und sich dadurch nur gegen größeren Widerstand nach unten in die Haltestellung bewegen läßt, kann in der Freigabestellung des Permanentmagneten zwischen diesem und dem Quersteg eine Schicht aus nicht magnetisierbarem Material vorgesehen sein, beispielsweise eine Messingschicht oder ein größerer Luftspalt, wobei der magnetische Widerstand dieser Schicht größer ist als der magnetische Widerstand der Luftspalte zwischen den oberen Abschnitten der Stege und dem Permanentmagneten.

In einer besonders bevorzugten Ausgestaltung der Erfindung sind die Stege und der Quersteg von einem unten zumindest teilweise offenen Gehäuse umgeben, das mit dem Permanentmagneten fest verbunden ist. Dieses Gehäuse dient dann nicht nur als Schutz für die Stege, den Quersteg und den Permanentmagneten, sondern auch als Griffelement zum Bewegen des Permanentmagneten, so daß der Permanentmagnet durch Anheben des Gehäuses und damit Verschieben des Gehäuses bezüglich der Stege in seine Freigabestellung kommt und die gesamte Haltevorrichtung am Gehäuse angehoben werden kann. Entsprechend kann die am Gehäuse gehaltene Haltevorrichtung auf eine ferromagnetische Unterlage bzw. ein ferromagnetisches Werkstück gesetzt und dann das Gehäuse nach unten verschoben werden, wodurch der Permanentmagnet in die Haltestellung gelangt.

Die bei Haltevorrichtungen dieser Art, insbesondere bei Meßständern, vorgesehene Ständersäule zur Halterung der Meßuhr u. ä. kann im Quersteg sich nach oben erstreckend befestigt sein. Wenn dann ein Gehäuse der vorstehend erwähnten Art vorgesehen ist, weist dieses Gehäuse in seiner oberen Wand eine Bohrung zum Durchtritt der Ständersäule auf. Wird die Haltevorrichtung beispielsweise als Hebezeug eingesetzt, so kann am oberen Ende der Ständersäule eine Öse für den Eingriff eines Kranhakens vorgesehen sein.

Die Erfindung wird im folgenden anhand der schematisch dargestellte, vereinfachte Ausführungsbeispiele zeigenden Figuren näher erläutert.

Figur 1 zeigt einen Schnitt durch eine Haltevorrichtung in Form eines Meßständers gemäß der Erfindung.

Figur 2 zeigt einen Schnitt entlang der Linie II - II aus Figur 1.

Figur 3 zeigt in einem Schnitt entsprechend Figur 1 ein anderes Ausführungsbeispiel der Erfindung.

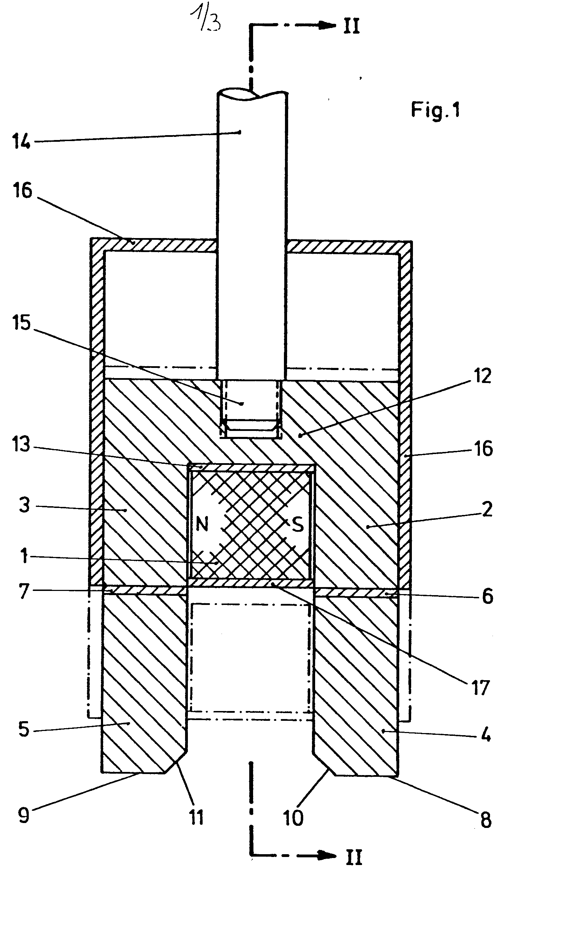

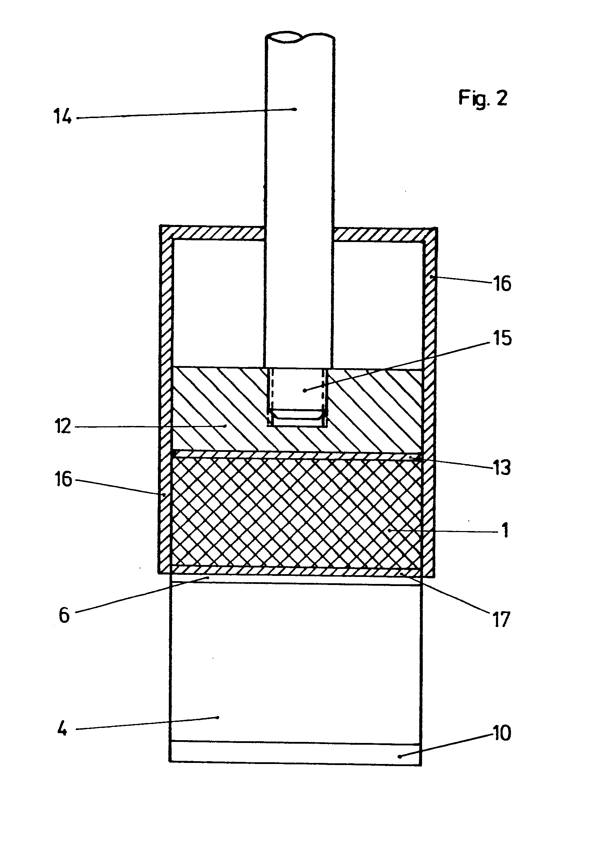

Der in den Figuren 1 und 2 dargestellte Meßständer hat zwei Stege, 2,4 und 3,5, die parallel zueinander verlaufen und gleiche Länge haben und deren obere Abschnitte 2,3 einstückig mit einem Quersteg 12 ausgebildet sind. Zwischen den unteren Abschnitten 4 und 5 und den zugehörigen oberen Abschnitten 2 und 3 der Stege sind Messingschichten 6,7 angeordnet, die beispielsweise durch Klebung mit den beiden zugehörigen Abschnitten verbunden sind. Die Stege 2,4 und 3,5 sowie der Quersteg 12 bestehen aus ferromagnetischem Material, etwa Stahl, beispielsweise Stahl St37.

Die unteren Flächen 8 und 9 der Stege sind geschliffen, und ihre Innenkanten sind Schrägflächen 10,11 bildend abgeschrägt. Zwischen den parallel verlaufenden Stegen 2,4 und 3,5 befindet sich ein Permanentmagnet 1, der in den Figuren in seiner oberen Stellung, der Freigabestellung, gezeigt ist. Dieser Magnet, der aus einem Ferrit bestehen kann, ist an einem Gehäuse 16 befestigt, beispielsweise geklebt, das aus tiefgezogenem Metall oder Kunststoff besteht und das in der gezeigten Stellung die oberen Abschnitte 2,3 der Stege und den Quersteg 12 umgibt. Das Gehäuse 16 weist eine getrennt eingesetzte, beispielsweise eingeklebte Bodenplatte 17 auf, die den Permanentmagneten 1 nach unten abschließt und so gegen Beschädigungen schützt. Ferner ist an der unteren Fläche des Quersteges 12 eine Schicht 13 aus nicht magnetisierbarem Material, etwa Messing, befestigt.

Das Gehäuse 16 umgibt die Stege und den Quersteg so, daß es entlang deren Außenflächen geführt in axialer Richtung der Stege zwischen der in den Figuren gezeigten Freigabestellung und der in Figur 1 strichpunktiert angedeuteten Haltestellung bewegt werden kann, wobei der mit dem Gehäuse 16 verbundene Permanentmagnet 1 in die in Figur 1 ebenfalls strichpunktiert angedeutete Haltestellung gebracht wird.

In eine Gewindebohrung in der oberen Fläche des Quersteges 12 ist mit einem Gewindeansatz 15 eine Ständersäule 14 eingeschraubt, die sich durch eine nicht näher bezeichnete Bohrung im Gehäuse 16 nach außen erstreckt und zur Halterung eines Gestänges für eine Meßuhr u. ä. dient.

In der in den Figuren dargestellten Lage des Permanentmagneten 1 und damit des Gehäuses 16 liegen der magnetische Nordpol und der magnetische Südpol, wie in Figur 1 angedeutet, jeweils über einen schmalen Luftspalt benachbart zum oberen Abschnitt 3 bzw. 2 eines Steges. Dadurch treten die magnetischen Feldlinien des Permanentmagneten aus dem magnetischen Nordpol über den schmalen Luftspalt in den oberen Abschnitt 3 des einen Steges ein, verlaufen durch den Quersteg 12 in den oberen Abschnitt 2 des anderen Steges und über den Luftspalt zum magnetischen Südpol des Permanentmagneten 1, da dieser Pfad den geringsten magnetischen Widerstand darstellt. Der Eintritt von magnetischen Feldlinien in die unteren Abschnitte 4,5 der Stege wird durch die Schichten 6,7 verhindert, die im Vergleich zu dem vorstehend erwähnten magnetischen Pfad einen sehr hohen magnetischen Widerstand darstellen.

Die zwischen dem Permanentmagneten 1 und der unteren Fläche des Quersteges 12 vorgesehene Schicht aus nicht magnetisierbarem Material hat einen größeren Widerstand als die Luftspalte zwischen dem Permanentmagneten 1 und den Stegabschnitten 2 und 3, so daß an dieser Stelle im wesentlichen keine Feldlinien in den Quersteg 12 eintreten. Dadurch wird ein Haften des Permanentmagneten am Quersteg 12 verhindert.

In der gezeigten Stellung kann der Meßständer am Gehäuse 16 angehoben und auf eine ferromagnetische Unterlage gesetzt werden, und zwar entweder mit den unteren Flächen 8 und 9 auf eine ebene Fläche oder mit den schrägen Flächen 10 und 11 auf eine gekrümmte, im allgemeinen im Querschnitt kreisförmige Fläche. Um den Meßständer auf dieser Unterlage zu befestigen, wird dann das Gehäuse 16 nach unten in die in Figur 1 strichpunktiert gezeichnete Stellung verschoben, wodurch auch der Permanentmagnet 1 in die strichpunktiert angedeutete Lage gebracht wird. Diese Verschiebung kann ohne Schwierigkeiten vorgenommen werden, da die Feldlinien zwischen Permanentmagnet 1 und Stegabschnitten 2 und 3 im wesentlichen senkrecht zur Bewegungsrichtung verlaufen, so daß sich keine nennenswerte, die Verschiebung des Permanentmagneten 1 behindernde Magnetkraft ergibt.

In der strichpunktiert gezeigten Haltestellung, in der sich der Permanentmagnet in einem Abstand vom Werkstück befindet, der größer ist als die Luftspalte zwischen ihm und den unteren Stegabschnitten 4,5, verlaufen die Feldlinien vom magnetischen Nordpol des Permanentmagneten 1 durch den unteren Stegabschnitt 5, die untere Fläche 9 und die Schrägfläche 11, die ferromagnetische Unterlage, die untere Fläche 8 und die Schrägfläche 10 des unteren Stegabschnittes 4 und über den Luftspalt zum magnetischen Südpol des Permanentmagneten 1, da dies der Pfad des geringsten magnetischen Widerstandes ist. Durch diesen Feldverlauf wird der Meßständer auf der ferromagnetischen Unterlage mit einer der Stärke des Magnetfeldes entsprechenden Kraft festgehalten.

Die obere Fläche des Permanentmagneten 1 liegt in der strichpunktiert angedeuteten Haltestellung unterhalb der Messingschichten 6 und 7, so daß praktisch keine Feldlinien in die oberen Stegabschnitte 2 und 3 eintreten und wegen der Messingschichten 6 und 7 auch nicht von den unteren Stegabschnitten 4 und 5 in die oberen Stegabschnitte 2 und 3 gelangen. Dadurch steht praktisch das gesamte Magnetfeld des Permanentmagneten 1 für die Halterung des Meßständers auf der ferromagnetischen Unterlage zur Verfügung.

Das Lösen des Meßständers von der ferromagnetischen Unterlage geschieht durch Anheben bzw. Verschieben des Gehäuses 16 nach oben, wobei der Permanentmagnet 1 mit dem Gehäuse nach oben bewegt wird. Da auch in diesem Fall die Bewegung des Permanentmagneten im wesentlichen senkrecht zum Verlauf der Feldlinien in den Luftspalten zwischen Permanentmagnet und unteren Stegabschnitten 4 und 5 erfolgt, wirkt dieser Bewegung des Permanentmagneten keine nennenswerte Magnetkraft entgegen.

Hat der Permanentmagnet die gezeigte Freigabestellung erreicht, in der er nicht mehr zwischen den unteren Stegabschnitten 4,5 liegt, verläuft das gesamte Magnetfeld wieder in der vorstehend beschriebenen Weise durch die oberen Stegabschnitte 2 und 3 und den Quersteg 12, so daß der Meßständer ohne weiteres von der ferromagnetischen Unterlage abgehoben werden kann.

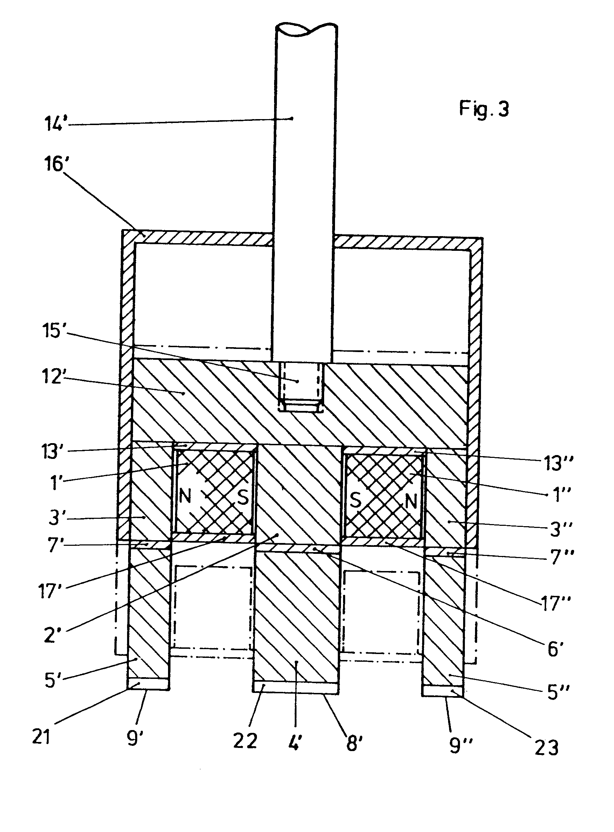

In Figur 3 ist in einer Darstellung entsprechend Figur 1 ein anderes Ausführungsbeispiel einer erfindungsgemäßen Haltevorrichtung in Form eines Meßständers gezeigt, der sich im wesentlichen durch einen zustäzlichen Steg und einen zusätzlichen Permanentmagneten von dem Meßständer gemäß Figuren 1 und 2 unterscheidet. Daher sind gleiche Bauelemente mit gleichen Bezugszeichen jedoch mit ' bezeichnet, während zusätzliche Elemente mit den gleichen Bezugszeichen und " benannt sind.

Wie bereits erwähnt, weist der Meßständer gemäß Figur 3 drei Stege auf, von denen Stege 2', 4' und 3', 5' den Stegen des Meßständers gemäß Figuren 1 und 2 entsprechen, jedoch der Steg 2', 4' den doppelten Querschnitt hat. Der zusätzliche Steg 3", 5" liegt im gleichen Abstand wie der Steg 3', 5' vom Steg 2', 4', jedoch an der gegenüberliegenden Seite, so daß sich zwischen den jeweils benachbarten Stegen gleich große Abstände ergeben, von denen der eine den bereits erwähnten Permanentmagneten 1' und der andere den Permanentmagneten 1" aufnimmt. Der Querschnitt des Steges 3", 5" entspricht dem Querschnitt des Steges 3', 5'.

Die Permanentmagneten 1', 1" sind entsprechend dem Ausführungsbeispiel gemäß Figuren 1 und 2 mit einem bewegbaren Gehäuse 16' verbunden, das zwei Bodenplatten 17', 17" aufweist. Der Quersteg 12' ist in diesem Fall nicht einstückig mit den Stegen ausgebildet, sondern in nicht dargestellter Weise mit diesen verschraubt.

Die Funktionsweise des Meßständers gemäß Figur 3 entspricht derjenigen des Meßständers gemäß Figuren 1 und 2, jedoch ergibt sich durch die Verwendung von zwei Permanentmagneten 1', 1", die mit gleichnamigen Magnetpolen, nämlich ihren Südpolen dem mittleren Steg 2', 4' zugewandt sind, in der strichpunktiert angedeuteten Haltestellung eine wesentlich vergrößerte Haltekraft, da die Feldlinien beider Permanentmagneten von den unteren Abschnitten 5', 5" der äußeren Stege durch deren untere Flächen 9', 9" und durch die ferromagnetische Unterlage hindurch verlaufen und durch die untere Fläche 8' des mittleren Steges in diesen eintreten, so daß sich also im Bereich des mittleren Steges eine Feldkonzentration ergibt,was eine erhebliche Erhöhung der Haltekraft zur Folge hat.

Um den Meßständer gemäß diesem Ausführungsbeispiel auch auf einer gekrümmten Unterlage, beispielsweise einer im Querschnitt kreisförmigen Welle befestigen zu können, sind in den unteren Flächen 9', 8', 9" der Stege in der Zeichenebene der Figur 3 liegende, sich nach oben verjüngende Ausschnitte vorhanden, von denen die schrägen Flächen 21, 22, 23 zu erkennen sind. Durch diese sich nach oben verjüngenden, im allgemeinen im Querschnitt dreiecksförmigen Ausschnitte läßt sich der Meßständer in definierter Weise auch auf eine Welle u. ä. aufsetzen und mittels Magnetkraft festlegen.

## Patentansprüche

1. Magnetische Haltevorrichtung, insbesondere Meßständer, mit mindestens einem bewegbaren Permanentmagneten, der zwischen zwei im Abstand voneinander befindlichen Stegen aus ferromagnetischem Material angeordnet ist, deren untere Flächen, gegebenenfalls unter Zwischenschaltung einer Schicht aus nicht magnetisierbarem Material, die Auflageflächen zur Verbindung mit dem Werkstück bilden, durch die in der Haltestellung des Permanentmagneten im wesentlichen die magnetischen Feldlinien verlaufen, während sich die magnetischen Feldlinien in der Freigabestellung des Permanentmagneten im wesentlichen innerhalb der Stege erstrecken, dadurch gekennzeichnet, daß die Stege (2,4; 3,5) in ihrem oberen Endbereich durch einen Quersteg (12) aus ferromagnetischem Material verbunden und quer zu ihrer Längserstreckung durch nicht magnetisierbares Material (6, 7) in jeweils einen unteren und einen oberen Abschnitt (4,5; 2,3) unterteilt sind und daß der Permanentmagnet (1) mit einem seiner Magnetpole dem einen Steg (3,5) und mit dem anderen Magnetpol dem anderen Steg (2,4) zugewandt in axialer Richtung der Stege (2,4; 3,5) zwischen der Haltestellung, in der er sich im Bereich der unteren Abschnitte (4,5) der Stege befindet, und der Freigabestellung, in der er sich im Bereich der oberen Abschnitte (2,3) der Stege befindet, bewegbar ist.

2. Haltevorrichtung nach Anspruch 1, gekennzeichnet durch drei im Abstand voneinander angeordnete Stege (2', 4'; 3', 5'; 3", 5"), zwischen denen jeweils ein Permanentmagnet (1'; 1") angeordnet ist, wobei dem mittleren Steg (2', 4') gleichnamige Pole der beiden Permanentmagneten (1', 1") zugewandt sind.

3. Haltevorrichtung nach Anspruch 2, dadurch gekennzeichnet, daß der Querschnitt des mittleren Steges (2', 4') doppelt so groß wie der Querschnitt jedes äußeren Steges (3', 5'; 3", 5") ist.

4. Haltevorrichtung nach einem der Ansprüche 1 bis 3, dadurch gekennzeichnet, daß die untere Fläche des bzw. der Permanentmagneten (1) in der Freigabestellung oberhalb des oder auf gleicher Höhe wie das die Stege (2,4; 3,5) unterteilende, nicht magnetisierbare Material (6,7) liegt.

5. Haltevorrichtung nach einem der Ansprüche 1 bis 4, dadurch gekennzeichnet, daß die axiale Länge der unteren Abschnitte (4,5) der Stege größer ist als die axiale Länge des bzw. der Permanentmagneten (1).

6. Haltevorrichtung nach einem der Ansprüche 1 bis 5, dadurch gekennzeichnet, daß in der Freigabestellung des bzw. der Permanentmagneten (1) zwischen diesem bzw. diesen und dem Quersteg (12) eine Schicht (13) aus nicht magnetisierbarem Material vorgesehen ist, deren magnetischer Widerstand größer ist als der magnetische Widerstand der Luftspalte zwischen dem bzw. den Permanentmagneten (1) und den oberen Abschnitten (2,3) der Stege.

7. Haltevorrichtung nach einem der Ansprüche 1 bis 6, dadurch gekennzeichnet, daß der Quersteg (12) und die oberen Abschnitte (2,3) der Stege einstückig ausgebildet sind.

8. Haltevorrichtung nach einem der Ansprüche 1 bis 7, dadurch gekennzeichnet, daß die Stege (2,4; 3,5) parallel zueinander verlaufen und daß sich der Quersteg (12) senkrecht zu den Stegen (2,4; 3,5) erstreckt.

9. Haltevorrichtung nach einem der Ansprüche 1 bis 8, dadurch gekennzeichnet, daß die unteren und oberen Abschnitte (4,5; 2,3) der Stege jeweils durch eine Messingschicht (6,7) getrennt sind.

10. Haltevorrichtung nach einem der Ansprüche 1 bis 9, dadurch gekennzeichnet, daß die Stege (2,4; 3,5) und der Quersteg (12) von einem unten zumindest teilweise offenen Gehäuse (16) umgeben sind, das mit dem Permanentmagneten (1) fest verbunden ist.

11. Haltevorrichtung nach einem der Ansprüche 1 bis 10, dadurch gekennzeichnet, daß im Quersteg (12) eine sich nach oben erstreckende Ständersäule (14) befestigt ist.

12. Haltevorrichtung nach den Ansprüchen 10 und 11, dadurch gekennzeichnet, daß in der oberen Wand des Gehäuses (16) eine Bohrung zum Durchtritt der Ständersäule (14) vorgesehen ist.

su/be

0008062

1/3

II
Fig.1
14
16
15
12
13
16
3
N
S
2
1
7
6
17
5
4
9
11
10
8
II

Fig. 2
14
16
15
12
13
16
1
6
17
4
10

Fig. 3
14'
16'
15'
12'
13'
1'
3'
7'
17'
2'
5'
21
9'
22
4'
8'
9''
23
5''
6'
17''
7''
3''
1''
13''
N
S
S
N

Europäisches Patentamt

# EUROPÄISCHER RECHERCHENBERICHT

0008062

Nummer der Anmeldung

EP 79 10 2715

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 650 728 (BAERMANN) * Abbildung 3; Seite 2, Zeilen 74-96 * -- | 1,4,5, 7-9 |
| | DE - A - 1 514 732 (SCHOLL) * Abbildung 1; Seite 11, Zeilen 9-16 * -- | 2-5 |
| | DE - B - 1 295 729 (GOPPINGER) * Abbildung 2; Spalte 2, Zeilen 47-65 * -- | 6 |
| | DE - B - 1 166 948 (MAGNETFABRIK) * Abbildung 1; Spalte 2, Zeilen 15-45 * -- | 10-12 |
| P | DE - B - 2 834 253 (HOLSATIA) * Das ganze Dokument * ---- | 1-12 |

KLASSIFIKATION DER ANMELDUNG (Int.Cl. 3)

G 12 B 9/08
H 01 F 7/04
G 01 D 11/30

RECHERCHIERTE SACHGEBIETE (Int. Cl. 3)

G 01 B 5/00
G 12 B 9/08
G 12 B 9/00
G 01 D 11/30
H 01 F 7/02
7/04
B 23 Q 3/154

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 07-11-1979 | IVES |